# EUROPÄISCHE PATENTSCHRIFT

(11) **EP 1 438 214 B1**
(45) Veröffentlichungstag und Bekanntmachung des Hinweises auf die Patenterteilung: **12.11.2008**
(21) Anmeldenummer: 02790302.0
(22) Anmeldetag: 22.10.2002
(51) Int. Cl.: B60R 13/02, H01H 9/08, E05B 65/20

(54) **EINRICHTUNG ZUM ABDECKEN EINES BEFESTIGUNGSMITTELS SOWIE BEDIENEINRICHTUNG ZUM BEFESTIGEN AN EINEM MODUL**
DEVICE FOR COVERING A FIXING ELEMENT AND CONTROL MECHANISM DESIGNED TO BE FIXED ON A MODULE
DISPOSITIF POUR COUVRIR UN ELEMENT DE FIXATION ET DISPOSITIF DE COMMANDE DESTINE A ETRE FIXE SUR UN MODULE

(30) Priorität: 26.10.2001 DE 10152452
(43) Veröffentlichungstag der Anmeldung: 21.07.2004
(73) Patentinhaber: Leopold Kostal GmbH & Co. KG, 58507 Lüdenscheid (DE)
(72) Erfinder: LUKSCH, Thomas, 58509 Lüdenscheid (DE); BLECKMANN, Michael, 58239 Schwerte (DE)
(86) Internationale Anmeldenummer: PCT/EP2002/011794
(87) Internationale Veröffentlichungsnummer: WO 2003/037684

(56) Entgegenhaltungen:
- EP-A- 0 404 155
- US-A- 5 282 657
- US-A- 5 565 663

## Beschreibung

Die Erfindung betrifft eine Einrichtung zum Abdecken eines Befestigungsmittels, mit welchem Befestigungsmittel ein erstes Modul an einem zweiten Modul befestigt ist, beispielsweise die Türinnenverkleidung der Tür eines Kraftfahrzeuges an einem Türtrageblech. Ferner betrifft die Erfindung eine Bedieneinrichtung mit zumindest einem beweglichen Betätigungsglied und mit Mitteln zum Befestigen desselben über lösbare Verriegelungsmittel an einem Modul.

Derartige Einrichtungen sind aus dem Automobil-Bereich bekannt. Bei Kraftfahrzeugen werden beispielsweise Blinddeckel verwendet, um Befestigungsschrauben, mit denen die Innenverkleidung einer Tür an einem Türtrageblech, Türtechnikträger oder Türtragestruktur befestigt ist, abzudecken. Dokument US-A-5,282,657 offenbart einen solchen Blinddeckel. Grundsätzlich ist die Türinnenverkleidung mit dem Türtrageblech durch Clipsverbinder verbunden, da diese Verbindungsmittel von der Sichtseite der Türinnenverkleidung nicht sichtbar sind oder von dieser Seite betätigt werden müßten. Eine solche Verbindung ist jedoch nicht ausreichend, um diejenigen Kräfte aufzunehmen, der die Türinnenverkleidung etwa im Bereich des Türinnengriffes bei einer Betätigung desselben ausgesetzt ist. Zu diesem Zweck ist die Türinnenverkleidung durch zumindest eine diese Kräfte aufnehmende Schraube mit dem Türtrageblech verbunden. Eine solche Schraube muß von der Innenseite des Kraftfahrzeuges zugänglich sein. Um den Schraubenkopf zu verblenden, werden beispielsweise besagte Blinddeckel auf den Schraubenkopf aufgesetzt oder in eine in der Türinnenverkleidung vorgesehene Schraubenöffnung eingesetzt. Derartige Blinddeckel stören jedoch das Design der Türinnenverkleidung.

Ebenfalls ist es möglich, die notwendigen Befestigungsschrauben an solchen Positionen anzuordnen, die üblicherweise von einem Benutzer nicht eingesehen werden können, beispielsweise unterhalb der Armlehne oder hinter dem Türgriff oder dergleichen. Eine Betätigung einer solchen Schraube ist jedoch umständlich. Insbesondere ist es mitunter schwierig, ein Werkzeug in diesen Positionen zum Ansatz zu bringen. Ferner stellen diese möglichen Positionen nicht die Position optimaler Krafteinleitung dar.

Ausgehend von diesem diskutierten Stand der Technik liegt der Erfindung daher die Aufgabe zugrunde, eine eingangs genannte Einrichtung dergestalt weiterzubilden, daß mit dieser die zum Stand der Technik aufgezeigten Nachteile vermeidbar sind.

Diese Aufgabe wird erfindungsgemäß zum einen dadurch gelöst, daß die Einrichtung eine mit zumindest einem beweglichen Betätigungsglied ausgestattete, an dem ersten Modul befestigte Bedieneinrichtung mit lösbaren Verriegelungsmitteln zum Befestigen der Bedieneinrichtung an dem ersten Modul umfaßt und zum Abdecken des von der Einrichtung insgesamt unabhängigen Befestigungsmittels sichtseitig vor demselben angeordnet ist sowie ferner ein betätigbares Entriegelungselement umfaßt, mit dem zur Zugänglichmachung des Befestigungsmittels nach einer Montage der Bedieneinrichtung an dem ersten Modul in Zusammenwirkung mit einer Betätigung des zumindest einen Betätigungsgliedes eine Entriegelung der Verriegelungsmittel der Bedieneinrichtung und eine anschließende Demontage der Bedieneinrichtung von dem ersten Modul durchführbar ist.

Ferner wird diese Aufgabe dadurch gelöst, daß daß Teil der Bedieneinrichtung ein von dem zumindest einen Betätigungselement separates Entriegelungselement ist, mit dem nach einer Montage der Bedieneinrichtung an dem ersten Modul in Zusammenwirkung mit einer Betätigung des zumindest einen Betätigungsgliedes eine Entriegelung der Verriegelungsmittel der Bedieneinrichtung und eine anschließende Demontage der Bedieneinrichtung von dem ersten Modul durchführbar ist.

Bei der erstgenannten Lösung ist als Abdeckeinrichtung eine Bedieneinrichtung, beispielsweise eine elektrische Schalteinrichtung mit zumindest einem beweglichen, und im Falle einer elektrischen Schalteinrichtung als Schaltglied ausgebildetes Betätigungsglied vorgesehen. Bezüglich des von dem von der Bedieneinrichtung unabhängigen Befestigungsmittels, beispielsweise der Schraube, ist die Bedieneinrichtung sichtseitig vor dem Befestigungsmittel angeordnet, so daß diese die Funktion eines Blinddeckels übernimmt. Die Bedieneinrichtung selbst ist durch lösbare Verriegelungsmittel mit dem ersten Modul, beispielsweise der Türinnenverkleidung eines Kraftfahrzeuges, verbindbar. Die lösbaren Verriegelungsmittel sind zweckmäßigerweise ausgestaltet, um mit dem ersten Modul einen Formschluß zur Befestigung der Bedieneinrichtung an dem ersten Modul herzustellen. Teil der Einrichtung ist neben der Bedieneinrichtung ebenfalls ein Entriegelungselement, welches auf die Verriegelungsmittel der Bedieneinrichtung, die zum Verriegeln derselben an dem ersten Modul vorgesehen sind, einwirkt. Dabei ist vorgesehen, daß eine Betätigung des Entriegelungselementes in Zusammenwirkung mit einer Betätigung des zumindest einen Betätigungsgliedes zum Bewirken einer Entriegelung und Demontage der Bedieneinrichtung von dem ersten Modul zur Folge hat. Dieses Zusammenwirken zwischen dem Entriegelungselement und dem zumindest einen Betätigungsglied kann beispielsweise bei Vorsehen von zwei Schaltgliedern, zwischen denen das Entriegelungselement als Trennsteg angeordnet ist, dadurch realisiert sein, daß zur Zugänglichmachung des Entriegelungselementes beide Schaltglieder gleichzeitig betätigt, etwa eingedrückt werden müssen, da bei einer solchen Ausgestaltung nur in der eingedrückten Stellung der beiden Schaltglieder das Verriegelungselement ergreifbar ist. Eine solche Ausgestaltung ist zweckmäßig, wenn die Schaltglieder der Einrichtung im normalen Betrieb grundsätzlich nicht gleichzeitig betätigt werden sollen. Durch Betätigung des Entriegelungselementes, was beispielsweise durch eine ziehende oder drückende Bewegung erfolgen kann, ist dann eine Entriegelung der Rastverbindung möglich, so daß die Schalteinrichtung ohne weiteres von dem ersten Modul entfernt werden kann.

Bei der beanspruchten Einrichtung brauchen somit keine besonderen Spaltmaße zwischen der Bedieneinrichtung und einer Aufnahme des ersten Moduls vorgesehen sein, in das ein Werkzeug zum Lösen der Verriegelung eingeführt werden müßte. Überdies braucht eine solche Einrichtung nicht zur Demontage zerstört werden, um nachträglich an das Befestigungsmittel von der Innenseite der Türinnenverkleidung eines Kraftfahrzeuges heranzukommen. Da die Bedieneinrichtung ohnehin eine Einrichtung ist, die grundsätzlich lösbar an der Türinnenverkleidung eines Kraftfahrzeuges beispielsweise angeordnet sein soll, wird diese Lösbarkeit beim Gegenstand der Erfindung eingesetzt, um der Schalteinrichtung eine weitere Funktionalität, nämlich das Abdecken eines Befestigungsmittels zukommen zu lassen.

Bevorzugt ist eine Ausgestaltung, bei der die Bedieneinrichtung eine elektrische Schalteranordnung oder eine Schalteinrichtung mit zumindest einem Schaltglied ist.

Besonders zweckmäßig ist die Ausgestaltung einer Einrichtung, bei der das Verriegelungselement formlich an das oder die Schaltglieder der Schalteinrichtung angepaßt ist. Dies kann beispielsweise, wie oben dargelegt, durch eine Anordnung des Entriegelungselementes als Trennsteg zwischen zwei Schaltgliedern realisiert sein. Ebenfalls ist es möglich, das Verriegelungselement als ein Schaltglied ganz oder teilweise einfassendes Element auszugestalten, welches bei einer Betätigung des Schaltgliedes beispielsweise einen Wulst oder eine Nase freigibt, an der dieses Entriegelungselement zur Entriegelung der Einrichtung hochgezogen werden kann.

Zur Verriegelung der Schalteinrichtung können zwei gelenkig miteinander verbundene und jeweils exzentrisch gelagerte Verriegelungselemente oder auch Verriegelungselementpaare eingesetzt sein. Diese verfügen über freie Enden, die in der montierten Anordnung der Schalteinrichtung an dem ersten Modul jeweils einen Hinterschnitt desselben hintergreifen. Das Entriegelungselement wirkt auf die gelenkige Verbindung der beiden Verriegelungselemente bzw. Verriegelungselementpaare zum Bewirken einer Entriegelung der Schalteinrichtung. Zweckmäßig ist eine Ausgestaltung, bei der das Entriegelungselement in den zwischen den einzelnen Elementen befindlichen Zwischenraum eingreift und zwei diametral gegenüberliegende Lagerzapfen trägt, auf denen die Verriegelungselemente bzw. die Verriegelungselementpaare gelagert oder geführt sind. Die Lagerzapfen können die Verriegelungselemente in Langlöchern druchgreifen. Bei dieser Ausgestaltung ist durch das Entriegelungselement auch die gelenkige Verbindung der Verriegelungselemente dargestellt. Die Verriegelungselemente stehen unter Federvorspannung, so daß diese in ihrer Verriegelungsposition unter Federvorspannung gehalten sind.

Zur Verriegelung der Schalteinrichtung an dem ersten Modul kann ebenfalls - wie in einem Ausführungsbeispiel vorgesehen - ein aus zwei gegeneinander bewegbaren und jeweils unter Federvorspannung stehenden Schiebern gebildetes Verriegelungsschieberpärchen eingesetzt sein. Jeder Schieber weist wiederum ein freies Ende auf, das in der montierten Anordnung an dem ersten Modul jeweils in einen Hinterschnitt desselben eingreift. Zwischen den beiden Schiebern ist eine Betätigungsöffnung angeordnet, in die das Entriegelungselement dergestalt eingreift, daß eine Betätigung des Entriegelungselementes zu einer gegeneinander gerichteten Bewegung der Schieber und somit zu einem Herausführen der freien Enden aus dem Hinterschnitt des ersten Moduls führt.

In einer bevorzugten Verwendung ist die Einrichtung eingesetzt zum Verblenden einer Befestigungsschraube, mit der die Innenverkleidung der Tür eines Kraftfahrzeuges mit einer Türtragestruktur bzw. einem Türtechnikträger verbunden ist.

Nachfolgend ist die Erfindung anhand von Ausführungsbeispielen unter Bezugnahme auf die beigefügten Figuren beschrieben. Es zeigen:
- **Fig. 1**: Den Bereich des Türinnengriffes der Türinnenverkleidung eines Kraftfahrzeuges mit einer Schalteinrichtung zum Betätigen einer Zentralverriegelungseinrichtung des Kraftfahrzeuges als Abdekkung einer Befestigungsschraube in einer perspektivischen Ansicht,
- **Fig. 2**: die Anordnung der Figur 1 mit der darin enthaltenen Schalteinrichtung mit betätigten Schaltgliedern zum Freisetzen eines Entriegelungselementes,
- **Fig. 3**: die Anordnung der Figur 2 mit dem betätigten, zwischen den Schaltgliedern der Schalteinrichtung angeordneten Entriegelungselement zum Entriegeln der Schalteinrichtung für eine Demontage von der Türinnenverkleidung,
- **Fig. 4**: die Anordnung der Figur 3 mit der von der Türinnenverkleidung demontierten Schalteinrichtung,
- **Fig. 5**: die an der Türinnenverkleidung montierte Schalteinrichtung der Figuren 1 - 4 in einem Schnitt entlang der Linie A - B der Figur 4,
- **Fig. 6**: in einer Explosionsdarstellung die zum Ver- und Entriegeln der Schalteinrichtung eingesetzten Elemente,
- **Fig. 7**: die Darstellung der Schalteinrichtung der Figur 5 mit dem zum Entriegeln betätigten Entriegelungselement,
- **Fig. 8**: eine Schalteinrichtung zum Bestücken einer Türinnenverkleidung zum Abdecken einer Befestigungsschraube gemäß einem weiteren Ausführungsbeispiel in einer Schnittdarstellung,
- **Fig. 9**: die Schalteinrichtung der Figur 8 im entriegelten Zustand,
- **Fig. 10**: die zum Ver- und Entriegeln der Schalteinrichtung der Figur 8 eingesetzten Elemente in einer Explosionsdarstellung und
- **Fig. 11**: eine erfindungsgemäße Schalteinrichtung gemäß einem dritten Ausführungsbeispiel in einer Schnittdarstellung.
- **Fig. 12**: eine erfindungsgemäße Schalteinrichtung gemäß einem vierten Ausführungsbeispiel in einer geöffneten Aufsicht
- **Fig. 13**: die Schalteinrichtung aus Fig. 12 in einer Schnittdarstellung entlang der dort gezeigten Linie A-A.

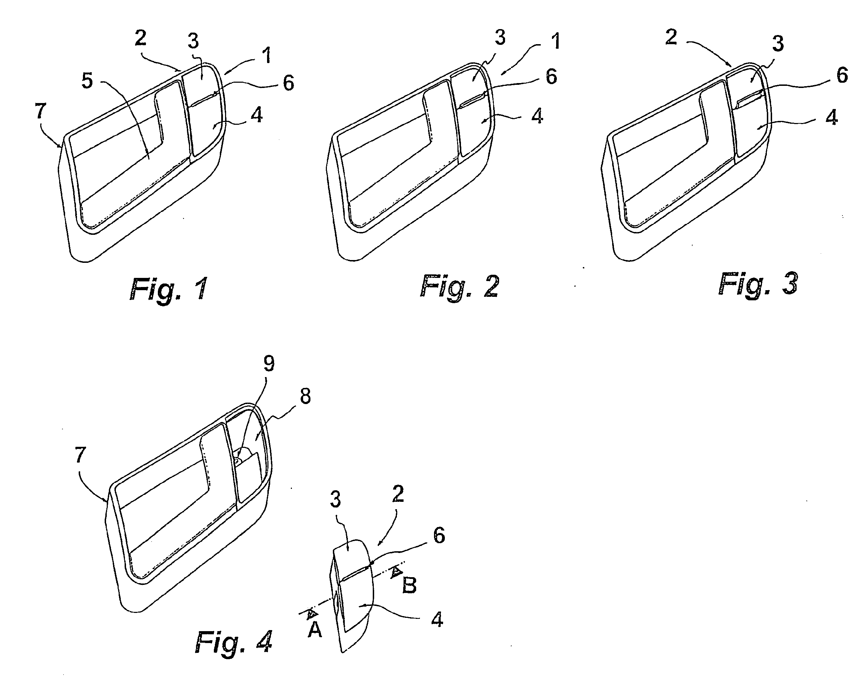

Eine Einrichtung 1 zum Abdecken einer Befestigungsschraube, mit der eine Innenverkleidung einer Tür eines Kraftfahrzeuges an einer Türtragestruktur befestigt ist, umfaßt eine Schalteinrichtung 2 mit zwei beweglichen, nach Art von Tastern ausgebildeten Schaltgliedern 3, 4. Die Schaltglieder 3, 4 sind vertikal betätigbar. Die Schalteinrichtung 2 ist angeordnet benachbart zu einem Türinnengriff 5. Die Einrichtung 1 umfaßt ferner ein Entriegelungselement 6, mit dem die Schalteinrichtung 2 von der Türinnenverkleidung, zu der der Türinnengriff 5 und eine Griffschale 7 gehörig sind, gelöst werden kann. Verriegelt ist die Schalteinrichtung 2 - wie weiter unten dargestellt - durch eine Rastverbindung an der Türinnenverkleidung. Die Schalteinrichtung 2 dient zum Betätigen einer Zentralverriegelungseinrichtung, wobei eine der beiden Schaltglieder 3 oder 4 zum Bewirken einer Verriegelung der Kraftfahrzeugtüren und das andere Schaltglied 4 oder 3 zum Entriegeln der Kraftfahrzeugtüren dient. Grundsätzlich ist eine gemeinsame Betätigung der beiden Schaltglieder 3, 4 nicht vorgesehen. Gleichwohl sind die beiden Schaltglieder 3, 4 gleichzeitig bei Überwindung eines höheren Betätigungswiderstandes betätigbar. Bei einer solchen Betätigung der beiden Schaltglieder 3, 4 wird das ansonsten bündig mit den Schaltgliedern 3, 4 abschließende Entriegelungselement 6 zugänglich bzw. ergreifbar, so daß in dieser Stellung der Schaltglieder 3, 4 das Entriegelungselement 6 ergriffen und betätigt werden kann (vgl. Figur 2). Bei dem in den Figuren 1 - 3 gezeigten Ausführungsbeispiel wird eine Entriegelung der Schalteinrichtung 2 durch ein Herausziehen des Entriegelungselementes 6 bewirkt, wie dies in Figur 3 dargestellt ist. In der in Figur 3 dargestellten Stellung der Schaltglieder 3, 4 sowie des Entriegelungselementes 6 ist die Schalteinrichtung 2 insgesamt aus der Schale 7 als Teil der Türinnenverkleidung herausnehmbar. Figur 4 zeigt die Schale 7 der Türinnenverkleidung mit einer Aufnahme 8, in der die Schalteinrichtung 2 ansonsten montiert ist. In der Aufnahme 8 befindet sich der Kopf einer Befestigungsschraube 9, mit der die Türinnenverkleidung an einer Türtragestruktur befestigt ist.

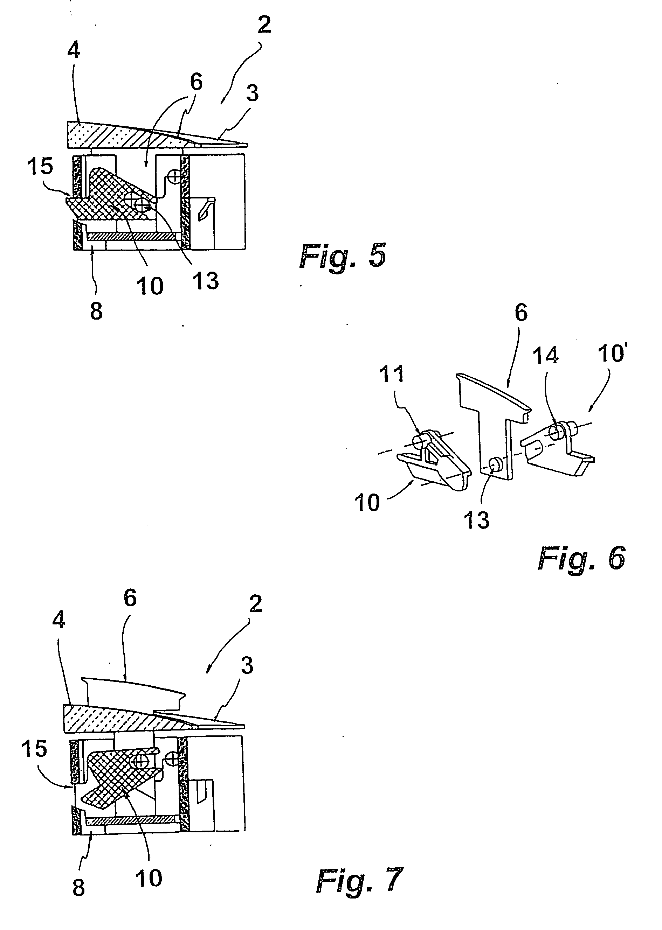

Die Schalteinrichtung 2 ist in den Figuren 5 - 7 mit den für eine Ver- und Entriegelung notwendigen Elementen dargestellt. Die in Figur 5 gezeigte Schnittdarstellung der Schalteinrichtung 2 zeigt die Schaltglieder 3 und 4 sowie das oberflächlich bündig mit den Schaltgliedern 3, 4 abschließende Entriegelungselement 6. Zum Verriegeln der Schalteinrichtung 2 dienen zwei Verriegelungselemente 10, 10' - wie in Figur 6 erkennbar - die mit dem Entriegelungselement 6 im Eingriff stehen. Die Verriegelungselemente 10, 10' sind exzentrisch gelagert, wozu der an dem Verriegelungselement 10 gekennzeichnete Lagerzapfen 11 dient. Das Entriegelungselement 6 hat einen schwertartigen Fortsatz 12, mit dem sich das Entriegelungselement 6 zwischen die beiden Verriegelungselemente 10, 10' erstreckt. Diametral gegenüberliegend trägt das Entriegelungselement 6 jeweils einen Lagerzapfen 13, der jeweils in eine langlochartige Führung 14 der beiden Verriegelungselemente 10, 10' eingreift. In der die Schalteinrichtung 2 verriegelnden Stellung der Verriegelungselemente 10, 10' greifen diese in eine Riegelöffnung 15 der Türinnenverkleidung als Hinterschnitt ein. Die Verriegelungselemente 10, 10' weisen einsteckseitig an ihren freien Enden Auflaufschrägen auf, so daß die Schalteinrichtung 2 ohne weiteres in die Aufnahme 8 eingesetzt werden kann. Die Verriegelungselemente 10, 10' stehen unter Federvorspannung, so daß diese grundsätzlich in ihrer verriegelten Stellung, in die Riegelöffnungen 15 eingreifend, verbleiben. Erst bei einer Betätigung des Entriegelungselementes 6 bei gleichzeitig gedrückten Schaltgliedern 3, 4 werden die freien Enden der Verriegelungselemente 10, 10' aus den Riegelöffnungen 15 herausgeschwenkt, so daß anschließend die gesamte Schalteinrichtung 2 werkzeuglos aus der Aufnahme 8 herausgenommen werden kann. Diese Situation ist in Figur 7 wiedergegeben.

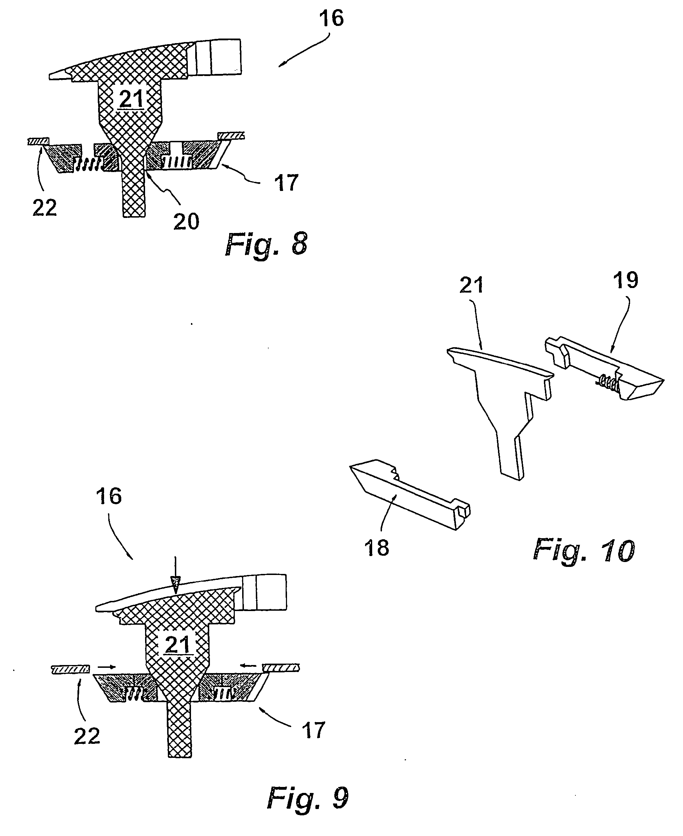

In einer weiteren Ausgestaltung einer Verriegelung einer Schalteinrichtung 16 ist zur Verriegelung derselben in einer Aufnahme ein Verriegelungsschieberpärchen 17 vorgesehen. Das Verriegelungsschieberpärchen 17 besteht aus zwei einzelnen Schiebern 18, 19 (vgl. Figur 9). Zwischen den beiden gegeneinander bewegbaren und unter Federvorspannung stehenden Schiebern 18, 19 ist eine Betätigungsöffnung 20 vorgesehen, in die das untere Ende eines Entriegelungselementes 21 eingreift. Bei dem dargestellten Ausführungsbeispiel weist jeder Schieber 18, 19 eine zu dem Entriegelungselement 21 weisende angeschrägte Stellfläche auf. Auch das Entriegelungselement 21 weist entsprechend geneigte Stellflächen auf, so daß bei einem Eindrücken des Entriegelungselementes 21 die beiden Schieber 18, 19 des Verriegelungsschieberpärchens 17 gegeneinander bewegt werden können, so daß deren freie Enden aus einer Riegelöffnung 22 heraus bewegt werden können. Die Situation ist in Figur 9 dargestellt. Nunmehr kann die Schalteinrichtung 16 ohne weiteres und insbesondere werkzeuglos aus einer in der Türinnenverkleidung befindlichen Aufnahme herausgenommen werden.

Die beiden Schieber 18, 19 sowie das Entriegelungselement 21 sind in einer Explosionsdarstellung nochmals in Figur 10 dargestellt. Aus dieser Darstellung ist ebenfalls erkennbar, daß die Schieber 18, 19 sich gegenseitig unter Federvorspannung stehend abstützen, um die Verriegelung der Schalteinrichtung 16 in einer Aufnahme der Türinnenverkleidung gewährleisten zu können. Auch bei diesem Ausführungsbeispiel weisen die freien Enden der Schieber 18,19 unterseitig geneigte Auflaufflächen auf, damit die Schalteinrichtung 16 ohne weiteres in eine Aufnahme der Türinnenverkleidung eingeschoben werden kann und die Schieber 18, 19 sich selbsttätig gegeneinander bewegen.

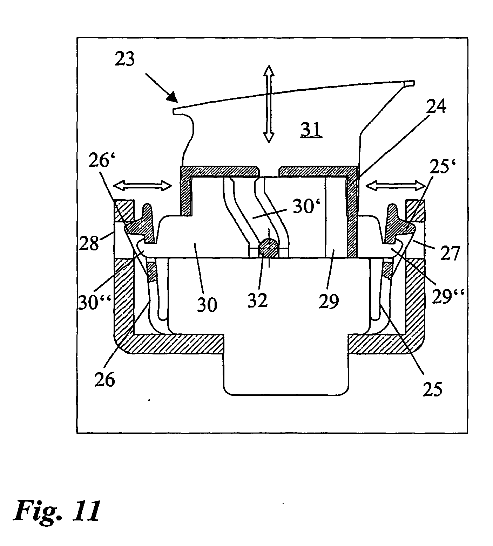

Aus Fig. 11 ist eine weitere Ausgestaltung einer Verriegelung einer Schalteinrichtung ersichtlich. Diese Schalteinrichtung 23 umfaßt ein Gehäuse 24, an dem zur Verriegelung desselben in einer Aufnahme Federlaschen 25, 26 angeformt sind. Die Federlaschen 25, 26 sind mit nach außen abragenden Klemmnasen 25', 26' versehen, welche im verriegelten Zustand in Hinterschnitte bildende Öffnungen 27, 28 der Aufnahme eingreifen und durch die durch die Federlaschen 25, 26 aufgebrachte Federkraft die Verriegelung bewirken. Zur Entriegelung der Schalteinrichtung 23 ist ein Entriegelungselement 31 vorgesehen, welches am unteren Ende seiner beiden Flachseiten Steuernocken 32, 32' aufweist. Diese Steuernocken sind mit Kulissenbahnen 29', 30' zweier Entriegelungsschieber 29 und 30 in Eingriff und bewirken beim Auf- und Abbewegen des Entriegelungselements 31 eine zu dessen Bewegungsrichtung senkrechte Bewegung der Entriegelungsschieber 29, 30. Die Entriegelungsschieber 29, 30 selbst sind an ihren äußeren Enden mit Haken 29", 30" versehen, die durch Öffnungen in den Federlaschen 25, 26 hindurchragen und diese auf ihrer Außenseite hintergreifen. Beim Aufwärtsbewegen des Entriegelungselements 31 ziehen die beiden Entriegelungsschieber 29, 30 die Federlaschen 25, 26 entgegen ihrer Federvorspannung nach innen und bewirken dabei ein Herausziehen der Klemmnasen 25', 26' aus den Öffnungen 27, 28 der Aufnahme. Die Schalteinrichtung 23 kann somit ohne weiteres und insbesondere werkzeuglos aus der in der Türinnenverkleidung befindlichen Aufnahme herausgenommen werden.

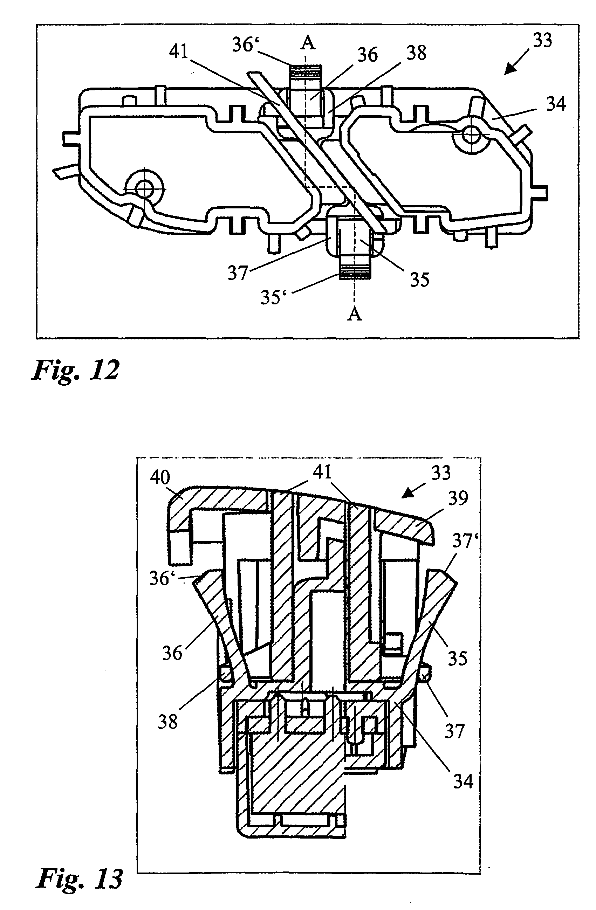

Einen weiter vereinfachten mechanischen Aufbau weist die in Fig. 12 und Fig. 13 dargestellte Ausgestaltung einer Verriegelung einer Schalteinrichtung auf.

Diese Schalteinrichtung 33 umfaßt ebenfalls ein Gehäuse 34, an dem zur Verriegelung desselben in einer Aufnahme Federlaschen 35, 36 angeformt sind. Die Federlaschen 35, 36 sind an ihrer abgeschrägten Oberseite mit Klemmrippen 35', 36' versehen, welche im verriegelten Zustand in Hinterschnitte bildende Öffnungen der Aufnahme eingreifen und durch die durch die Federlaschen 35, 36 aufgebrachte Federkraft die Verriegelung bewirken. Zur Entriegelung der Schalteinrichtung 33 ist ein als flacher Schieber ausgebildetes Entriegelungselement 41 vorgesehen, welches als Trennsteg zwischen den Betätigungsgliedem 39 und 40 angeordnet und in der gleichen Richtung wie diese bewegbar ist (in der Darstellung in Fig. 12 sind die in Fig. 13 sichtbaren Abdeckkappen der Betätigungsglieder weggelassen). Das Entriegelungselement 41 weist an seinem unteren Ende an einander gegenüberliegenden Kanten Zugbügel 37, 38 auf, die die Federlaschen 35, 36 umgreifen und auf deren Außenseiten an diesen anliegen. Beim Aufwärtsbewegen des Entriegelungselements 41 gleiten die Zugbügel 37, 38 an den Federlaschen 35, 36 entlang nach oben und ziehen diese entgegen ihrer Federvorspannung aus ihrer nach außen ausgestellten Position nach innen und bewirken dabei ein Herausziehen der Klemmrippen 35', 36' aus den Öffnungen der Aufnahme. Die Schalteinrichtung 33 kann somit ohne weiteres und insbesondere werkzeuglos aus der in der Türinnenverkleidung befindlichen Aufnahme herausgenommen werden. Zum Einsetzen der Schalteinrichtung 33 in die Öffnung wird das Entriegelungselement 41 in seine untere Position gebracht. Die Federlaschen 35, 36 befinden sich dadurch in ihrer in der Zeichnung gezeigten, nach außen ausgestellten Position. Beim Einschieben der Schalteinrichtung 33 in eine entsprechende Aufnahme z.B. in der Türinnenverkleidung weichen die Federlaschen 35, 36 nach innen aus, und ermöglichen so ein problemloses Einschieben. Sobald die oberen Enden der Federlaschen 35, 36 die zugeordneten Öffnungen in den Seitenwänden der Aufnahme erreichen, schwenken sie durch ihre Federkraft bedingt nach außen und verhaken sich mit ihren Klemmrippen 35', 36' fest an den Oberkanten dieser Öffnungen. Dadurch ein fester Sitz der Schalteinrichtung 33 in der Aufnahme gewährleistet.

### Bezugszeichenliste

- 1: Einrichtung
- 2: Schalteinrichtung
- 3, 4: Schaltglied
- 5: Türinnengriff
- 6: Entriegelungselement
- 7: Schale
- 8: Aufnahme
- 9: Befestigungsschraube
- 10, 10': Verriegelungselement
- 11, 13: Lagerzapfen
- 12: Fortsatz
- 14: Führung
- 15: Riegelöffnung
- 16: Schalteinrichtung
- 17: Verriegelungsschieberpärchen
- 18, 19: Schieber
- 20: Betätigungsöffnung
- 21: Entriegelungselement
- 22: Riegelöffnung
- 23: Schalteinrichtung
- 24: Gehäuse
- 25, 26: Federlasche
- 25', 26': Klemmnase
- 27,28: Öffnung
- 29,30: Entriegelungsschieber
- 29', 30': Kulissenbahn
- 29", 30": Haken
- 31: Entriegelungselement
- 32, 32': Steuernocken
- 33: Schalteinrichtung
- 34: Gehäuse
- 35,36: Federlasche
- 37, 38: Zugbügel
- 39, 40: Betätigungsglied
- 41: Entriegelungselement

## Patentansprüche

1. Einrichtung zum Abdecken eines Befestigungsmittels (9), mit welchem Befestigungsmittel (9) ein erstes Modul an einem zweiten Modul befestigt ist, **dadurch gekennzeichnet, daß** die Einrichtung (1) eine mit zumindest einem beweglichen Betätigungsglied (3, 4; 39, 40) ausgestattete, an dem ersten Modul befestigte Bedieneinrichtung (2, 16, 23, 33) mit lösbaren Verriegelungsmitteln zum Befestigen der Bedieneinrichtung (2, 16, 23, 33) an dem ersten Modul umfaßt und zum Abdecken des von der Einrichtung (1) insgesamt unabhängigen Befestigungsmittels (9) sichtseitig vor demselben angeordnet ist sowie ferner ein betätigbares Entriegelungselement (6, 21, 31,41) umfaßt, mit dem zur Zugänglichmachung des Befestigungsmittels (9) nach einer Montage der Bedieneinrichtung (2, 16, 23, 33) an dem ersten Modul in Zusammenwirkung mit einer Betätigung des zumindest einen Betätigungsgliedes (3, 4; 39, 40) eine Entriegelung der Verriegelungsmittel der Bedieneinrichtung (2, 16, 23, 33) und eine anschließende Demontage der Bedieneinrichtung (2, 16, 23, 33) von dem ersten Modul durchführbar ist.

2. Einrichtung nach Anspruch 1, **dadurch gekennzeichnet, daß** das Entriegelungselement (6, 21, 31, 41) ein von dem zumindest einen Betätigungsglied (3, 4; 39, 40) unabhängiges Element ist.

3. Einrichtung nach Anspruch 2, **dadurch gekennzeichnet, daß** das Entriegelungselement (6, 21, 31, 41) formlich an das oder die Betätigungsglieder (3, 4; 39, 40) der Bedieneinrichtung (2, 16, 23, 33) angepaßt ist.

4. Einrichtung nach Anspruch 2 oder 3, **dadurch gekennzeichnet, daß** die Bedieneinrichtung (2, 16, 23, 33) zwei Betätigungsglieder (3, 4; 39, 40) umfaßt, zwischen denen das Entriegelungselement (6, 21, 31, 41), in derselben Richtung wie die Betätigungsglieder (3, 4; 39, 40) bewegbar, als Trennsteg angeordnet ist.

5. Einrichtung nach einem der Ansprüche 1 - 4, **dadurch gekennzeichnet, daß** zur Verriegelung der Bedieneinrichtung (2) an dem ersten Modul zwei gelenkig miteinander verbundene, jeweils exzentrisch gelagerte Verriegelungselemente (10, 10') eingesetzt sind, deren freie Enden in der montierten Anordnung der Bedieneinrichtung (2) an dem ersten Modul jeweils einen Hinterschnitt (15) desselben hintergreifen.

6. Einrichtung nach einem der Ansprüche 1 - 4, **dadurch gekennzeichnet, daß** zur Verriegelung der Bedieneinrichtung (16) an dem ersten Modul ein aus zwei gegeneinander bewegbaren und unter Federvorspannung stehenden Schiebern (18, 19) gebildetes Verriegelungsschieberpärchen (17) eingesetzt ist, deren jeweils freies Ende in der montierten Anordnung der Bedieneinrichtung (16) am ersten Modul jeweils einen Hinterschnitt (22) desselben hintergreift.

7. Einrichtung nach einem der Ansprüche 1 - 4, **dadurch gekennzeichnet, daß** die Bedieneinrichtung (23) ein Gehäuse 24 umfaßt, an dem zur Verriegelung desselben in einer zugeordneten Aufnahme mit nach außen abragenden Klemmnasen (25', 26') versehene Federlaschen (25, 26) angeformt sind, welche Klemmnasen (25', 26') im verriegelten Zustand in Hinterschnitte bildende Öffnungen (27, 28) der Aufnahme eingreifen und durch die durch die Federlaschen (25, 26) aufgebrachte Federkraft die Verriegelung bewirken.

8. Einrichtung nach einem der Ansprüche 1 - 4, **dadurch gekennzeichnet, daß** die Bedieneinrichtung (33) ein Gehäuse (34) umfaßt, an dem zur Verriegelung desselben in einer zugeordneten Aufnahme an ihrer abgeschrägten Oberseite mit Klemmrippen (35', 36') versehene Federlaschen (35, 36) angeformt sind, welche Klemmrippen (35', 36') im verriegelten Zustand in Hinterschnitte bildende Öffnungen der Aufnahme eingreifen und durch die durch die Federlaschen (35, 36) aufgebrachte Federkraft die Verriegelung bewirken.

9. Einrichtung nach Anspruch 8, **dadurch gekennzeichnet, daß** zur Entriegelung der Schalteinrichtung (33) ein als flacher Schieber ausgestaltetes Entriegelungselement (41) vorgesehen ist, welches an seinem unteren Ende an einander gegenüberliegenden Kanten die Federlaschen (35, 36) umgreifende Zugbügel (37, 38) aufweist, welche beim Aufwärtsbewegen des Entriegelungselements an den Federlaschen (35, 36) entlang nach oben gleiten und diese entgegen ihrer Federvorspannung aus ihrer nach außen ausgestellten Position nach innen ziehen und dabei ein Herausziehen der Klemmrippen (35', 36') aus den Öffnungen der Aufnahme bewirken.

10. Einrichtung nach einem der Ansprüche 1 - 9, **dadurch gekennzeichnet, daß** das erste Modul die Türinnenverkleidung, das zweite Modul die Türtragestruktur einer Tür und die Bedieneinrichtung (2, 16, 23, 33) eine elektrische Schalteranordnung zum Betätigen der Zentralverriegelungseinrichtung eines Kraftfahrzeuges sind.

11. Bedieneinrichtung mit zumindest einem beweglichen Betätigungsglied (3, 4; 39, 40) und mit Mitteln zum Befestigen desselben über lösbare Verriegelungsmittel an einem Modul, **dadurch gekennzeichnet, daß** Teil der Bedieneinrichtung (2, 16, 23, 33) ein von dem zumindest einen Betätigungselement separates Entriegelungselement (6, 21, 31, 41) ist, mit dem nach einer Montage der Bedieneinrichtung (2, 16, 23, 33) an dem Modul in Zusammenwirkung mit einer Betätigung des zumindest einen Betätigungsgliedes (3, 4; 39, 39) eine Entriegelung der Verriegelungsmittel der Bedieneinrichtung (2, 16, 23, 33) und eine anschließende Demontage der Bedieneinrichtung (2, 16, 23, 33) von dem Modul durchführbar ist.

12. Einrichtung nach Anspruch 11, **dadurch gekennzeichnet, daß** das Entriegelungselement (6, 21, 31, 41) formlich an das oder die Betätigungsglieder (3, 4; 39, 40) der Bedieneinrichtung (2, 16, 23, 33) angepaßt ist.

13. Einrichtung nach Anspruch 11 oder 12, **dadurch gekennzeichnet, daß** die Bedieneinrichtung (2, 16, 23, 33) zwei Betätigungsglieder (3, 4; 39, 40) umfaßt, zwischen denen das Entriegelungselement (6, 21, 31, 41) in derselben Richtung wie die Betätigungsglieder (3, 4; 39, 40) bewegbar als Trennsteg angeordnet ist.

14. Einrichtung nach einem der Ansprüche 11 - 13, **dadurch gekennzeichnet, daß** die Bedieneinrichtung (23) ein Gehäuse 24 umfaßt, an dem zur Verriegelung desselben in einer zugeordneten Aufnahme mit nach außen abragenden Klemmnasen (25', 26') versehene Federlaschen (25, 26) angeformt sind, welche Klemmnasen (25', 26') im verriegelten Zustand in Hinterschnitte bildende Öffnungen (27, 28) der Aufnahme eingreifen und durch die durch die Federlaschen (25, 26) aufgebrachte Federkraft die Verriegelung bewirken.

15. Einrichtung nach einem der Ansprüche 11 - 13, **dadurch gekennzeichnet, daß** die Bedieneinrichtung (33) ein Gehäuse (34) umfaßt, an dem zur Verriegelung desselben in einer zugeordneten Aufnahme an ihrer abgeschrägten Oberseite mit Klemmrippen (35', 36') versehene Federlaschen (35, 36) angeformt sind, welche Klemmrippen (35', 36') im verriegelten Zustand in Hinterschnitte bildende Öffnungen der Aufnahme eingreifen und durch die durch die Federlaschen (35, 36) aufgebrachte Federkraft die Verriegelung bewirken.

16. Einrichtung nach einem der Ansprüche 11 - 15, **dadurch gekennzeichnet, daß** die Bedieneinrichtung (2, 16, 23, 33) eine elektrische Schalteranordnung zum Betätigen der Zentralverriegelungseinrichtung eines Kraftfahrzeuges und das erste Modul die Innenverkleidung einer Tür eines Kraftfahrzeuges sind.

## Claims

1. Facility for covering up a fastener (9), the said fastener (9) intended for attaching a first module to a second module, **characterised by the fact** that the facility (1) incorporates an operating device (2, 16, 23, 33) which is attached to the first module and is equipped with at least one moveable actuating member (3, 4; 39, 40) and with a detachable interlocking mechanism for fastening the operating device (2, 16, 23, 33) to the first module, and which, in order to cover the fastener (9), which is completely independent of the facility (1), is arranged in front of the same on the visible side, and additionally incorporates a controllable releasing element (6, 21, 31, 41) with which, in cooperation with an actuation of the at least one actuating member (3, 4; 39, 40), it is possible to conduct a release of the interlocking mechanism of the operating device (2, 16, 23, 33) and a subsequent detachment of the operating device (2, 16, 23, 33) from the first module for the purpose of making the fastener (9) accessible subsequent to attaching the operating device (2, 16, 23, 33) to the first module.

2. Facility in accordance with Claim 1, **characterised by the fact** that the releasing element (6, 21, 31, 41) is an element which is independent of the at least one actuating member (3, 4; 39, 40).

3. Facility in accordance with Claim 2, **characterised by the fact** that the releasing element (6, 21, 31, 41) is adapted in shape to the actuating member or members (3, 4; 39, 40) of the operating device (2, 16, 23, 33).

4. Facility in accordance with Claim 2 or Claim 3, **characterised by the fact** that the operating device (2, 16, 23, 33) comprises two actuating members (3, 4; 39, 40) between which the releasing element (6, 21, 31, 41), which is moveable in the same direction as the actuating members (3, 4; 39, 40), is positioned as a separating web.

5. Facility in accordance with any of Claims 1 to 4, **characterised by the fact** that, for the purpose of fastening the operating device (2) to the first module, two flexibly interconnected interlocking elements (10, 10') are utilised, each of which is eccentrically supported, and each of the free ends of which engages behind an undercut (15) on the first module when the operating device (2) is in its assembled arrangement.

6. Facility in accordance with any of Claims 1 to 4, **characterised by the fact** that, for the purpose of fastening the operating device (16) to the first module, a pair of locking sliders (17) is utilised which constitutes two sliders (18, 19) that can be moved opposing each other and are subject to spring preload, with each of the free ends of the locking sliders (17) engaging behind an undercut (22) on the first module when the operating device (16) is in its assembled arrangement.

7. Facility in accordance with any of Claims 1 to 4, **characterised by the fact** that the operating device (23) incorporates a housing 24 onto which resilient lugs (25, 26) provided with outwardly protruding clamping projections (25', 26') are integrally moulded for the purpose of fastening the housing 24 into an allocated receptacle, with the clamping projections (25', 26') engaging in their locked state in apertures constituting undercuts (27, 28) in the receptacle and effecting the interlock by means of the elastic force generated by the resilient lugs (25, 26).

8. Facility in accordance with any of Claims 1 to 4, **characterised by the fact** that the operating device (33) incorporates a housing (34) onto which resilient lugs (35, 36) provided with clamping ribs (35', 36') on their bevelled upper side are integrally moulded for the purpose of fastening the housing (34) into an allocated receptacle, with the clamping ribs (35', 36') engaging in their locked state in apertures constituting undercuts in the receptacle, effecting the interlock by means of the elastic force generated by the resilient lugs (35, 36).

9. Facility in accordance with Claim 8, **characterised by the fact** that a releasing element (41) is provided which is designed as a flat slider and intended for unlocking the switching device (33) and which features tension clips (37, 38) on its bottom end that clasp the resilient lugs (35, 36) on opposing edges and, when the releasing element is moved upwards, slide upwards along the resilient lugs (35, 36), pulling the same inward from their outwardly flaring position against their spring preload, at the same time causing the clamping ribs (35', 36') to be pulled out of the apertures in the receptacle.

10. Facility in accordance with any of Claims 1 to 9, **characterised by the fact** that the first module is the inner door panel, the second module is the door supporting structure of the door and the operating device (2, 16, 23, 33) is an electrical switch arrangement for actuating the central locking system of a motor vehicle.

11. Operating facility with at least one moveable actuating member (3, 4; 39, 40) and with means for fastening the same to a module by means of detachable interlocking means, **characterised by the fact** that part of the operating device (2, 16, 23, 33) is a releasing element (6, 21, 31, 41) which is separate from the at least one actuating member and with which, subsequent to attaching the operating device (2, 16, 23, 33) to the module, it is possible to carry out a release of the interlocking means of the operating device (2, 15, 23, 33) in cooperation with an actuation of the at least one actuating member (3, 4; 39, 40) and to subsequently detach the operating device (2, 16, 23, 33) from the module.

12. Facility in accordance with Claim 11, **characterised by the fact** that the releasing element (6, 21, 31, 41) is adapted in shape to the actuating member or members (3, 4; 39, 40) of the operating device (2, 16, 23, 33).

13. Facility in accordance with Claim 11 or Claim 12, **characterised by the fact** that the operating device (2, 16, 23, 33) incorporates two actuating members (3, 4; 39, 40) between which the releasing element (6, 21, 31, 41) is arranged as a separating web and is moveable in the same direction as the actuating members (3, 4; 39, 40).

14. Facility in accordance with any of Claims 11 to 13, **characterised by the fact** that the operating device (23) incorporates a housing 24 onto which resilient lugs (25, 26) with outwardly protruding clamping projections (25', 26') are integrally moulded for the purpose of fastening the same into an allocated receptacle, with the clamping projections (25', 26') engaging in their interlocked state in apertures (27, 28) forming undercuts in the receptacle, and by means of which the interlocking is effected as a result of the elastic force generated by the resilient lugs (25, 26).

15. Facility in accordance with any of Claims 11 to 13, **characterised by the fact** that the operating device (33) incorporates a housing (34) onto which resilient lugs (35, 36) provided on their bevelled upper side with clamping ribs (35', 36') are integrally moulded for the purpose of fastening the housing (34) into an allocated receptacle, with the clamping ribs (35', 36') engaging in their interlocked state in apertures forming undercuts in the receptacle, effecting the interlock by means of the elastic force generated by the resilient lugs (35, 36).

16. Facility in accordance with any of Claims 11 to 15, **characterised by the fact** that the operating device (2, 16, 23, 33) constitutes an electric switch arrangement for controlling the central locking system of a motor vehicle, and the first module constitutes the inner panel of a door of a motor vehicle.

## Revendications

1. Dispositif pour le recouvrement d'un moyen de fixation (9), moyen de fixation (9) avec lequel un premier module est fixé à un deuxième module, **caractérisé en ce que** le dispositif (1) comprend un dispositif de commande (2, 16, 23, 33), équipé d'au moins un organe d'actionnement (3, 4; 39, 40) et fixé au premier module avec des moyens de verrouillage amovibles pour la fixation du dispositif de commande (2, 16, 23, 33) au premier module, et, pour le recouvrement du moyen de fixation (9), indépendant dans l'ensemble du dispositif (1), est disposé devant celui-ci, sur le côté visible, et, en outre, comprend un élément de déverrouillage (6, 21, 31, 41) actionnable, avec lequel, pour permettre l'accès au moyen de fixation (9), après le montage du dispositif de commande (2, 16, 23, 33) au premier module, en coopération avec un actionnement de l'organe d'actionnement (3, 4; 39, 40) au moins prévu, peuvent être effectués un déverrouillage des moyens de verrouillage du dispositif de commande (2, 16, 23, 33) et un démontage ultérieur du dispositif de commande (2, 16, 23, 33) du premier module.

2. Dispositif selon la revendication 1, **caractérisé en ce que** l'élément de déverrouillage (6, 21, 31, 41) est un élément indépendant de l'organe d'actionnement (3, 4; 39, 40) au moins prévu.

3. Dispositif selon la revendication 2, **caractérisé en ce que** l'élément de déverrouillage (6, 21, 31, 41) est adapté à l'élément ou aux éléments d'actionnement (3, 4 ; 39, 40) du dispositif de commande (2, 16, 23, 33) en ce qui concerne la forme.

4. Dispositif selon revendication 2 ou 3, **caractérisé en ce que** le dispositif de commande (2, 16, 23, 33) comprend deux organes d'actionnement (3, 4; 39, 40), entre lesquels l'élément de déverrouillage (6, 21, 31, 41), pouvant être déplacé dans la même direction que les organes d'actionnement (3, 4; 39, 40) est disposé en tant que patte de séparation.

5. Dispositif selon l'une des revendications 1 à 4, **caractérisé en ce que,** pour le verrouillage du dispositif de commande (2), sont prévus, sur le premier module, deux éléments de verrouillage (10, 10'), reliés ensemble de manière articulée et montés chacun excentriquement, dont les extrémités libres, quand le dispositif de commande (2) est monté au premier module, s'agrippent chacun derrière une contre-dépouille (15) de celui-ci.

6. Dispositif selon l'une des revendications 1 à 4, **caractérisé en ce que,** pour le verrouillage du dispositif de commande (16), le premier module est équipé d'une paire de verrous (17), formé de deux coulisseaux (18, 19), pouvant être déplacés à l'opposé l'un de l'autre et soumis à une précontrainte de ressort, dont l'extrémité libre de chacun, quand le dispositif de commande (16) est monté au premier module, s'agrippe derrière une contre-dépouille (22) de celui-ci.

7. Dispositif selon l'une des revendications 1 à 4, **caractérisé en ce que** le dispositif de commande (23) comprend un boîtier (24), sur lequel, pour le verrouillage de celui-ci, sont formées, dans un réceptacle y associé, des pattes élastiques (25, 26) pourvues de nez de serrage (25', 26') en saillie vers l'extérieur, lesquels nez de serrage (25', 26') s'engagent, à l'état verrouillé, dans des ouvertures (27, 28) du réceptacle formant des contre-dépouilles, et provoquent le verrouillage par la force élastique, appliquée par les pattes élastiques (25, 26).

8. Dispositif selon l'une des revendications 1 à 4, **caractérisé en ce que** le dispositif de commande (33) comprend un boîtier (34), sur lequel, pour le verrouillage de celui-ci, sont formées, dans un réceptacle y associé, des pattes élastiques (35, 36) pourvues, sur leur surface biseautée, de nervures de serrage (35', 36'), lesquelles nervures de serrage (35', 36') s'engagent, à l'état verrouillé, dans des ouvertures du réceptacle formant des contre-dépouille, et provoquent le verrouillage par la force élastique, appliquée par les pattes élastiques (35, 36).

9. Dispositif selon l'a revendication 8, **caractérisé en ce que**, pour le déverrouillage du dispositif de commutation (33), est prévu un élément de déverrouillage (41), réalisé sous la forme d'un coulisseau plat, qui présente, à son extrémité inférieure, sur des bords opposés l'un à l'autre, des étriers de traction (37, 38) qui, agrippant les pattes élastiques (35, 36), glissent vers le haut, le long des pattes élastiques (35, 36), lors d'un mouvement ascendant de l'élément de déverrouillage, et attirent celles-ci vers l'intérieur, à partir de leur position orientée vers l'extérieur, en surmontant une précontrainte élastique, et tirent ainsi les nervures de serrage (35', 36') hors des ouvertures.

10. Dispositif selon l'une des revendications 1 à 9, **caractérisé en ce que** le premier module est le revêtement de l'intérieur d'une portière, le deuxième module est la structure portante d'une portière, et le dispositif de commande (2, 16, 23, 33) est un circuit de commutation électrique pour l'actionnement du dispositif de verrouillage central d'un véhicule automobile.

11. Dispositif de commande avec au moins un organe d'actionnement mobile (3, 4 ; 39, 40) et avec des moyens pour fixer celui-ci à un module, par l'intermédiaire de moyens de verrouillage détachables, **caractérisé en ce que** fait partie du dispositif de commande (2, 16, 23, 33) un l'élément de déverrouillage (6, 21, 31, 41), séparé de l'élément d'actionnement au moins prévu, avec lequel, après un montage du dispositif de commande (2, 16, 23, 33) au module, en coopération avec un actionnement de l'organe d'actionnement (3, 4; 39, 40) au moins prévu, un déverrouillage des moyens de verrouillage du dispositif de commande (2, 16, 23, 33) et un démontage ultérieur, séparant le dispositif de commande (2, 16, 23, 33) du module, peuvent être exécutés.

12. Dispositif selon la revendication 11, **caractérisé en ce que** l'élément de déverrouillage (6, 21, 31, 41) est adapté à l'élément ou aux organes d'actionnement (3, 4 ; 39, 40) du dispositif de commande (2, 16, 23, 33) en ce qui concerne la forme..

13. Dispositif selon revendication 11 ou 12, **caractérisé en ce que** le dispositif de commande (2, 16, 23, 33) comprend deux organes d'actionnement (3, 4; 39, 40), entre lesquels l'élément de déverrouillage (6, 21, 31, 41), pouvant être déplacé dans la même direction que les organes d'actionnement (3, 4; 39, 40), est disposé en tant que patte de séparation.

14. Dispositif selon l'une des revendications 11 à 13, **caractérisé en ce que** le dispositif de commande (23) comprend un boîtier (24), sur lequel, pour le verrouillage de celui-ci, sont formées, dans un réceptacle y associé, des pattes élastiques (25, 26) pourvues de nez de serrage (25', 26') en saillie vers l'extérieur, lesquels nez de serrage (25', 26') s'engagent, à l'état verrouillé, dans des ouvertures (27, 28) du réceptacle formant des contre-dépouilles, et provoquent le verrouillage par la force élastique, appliquée par les pattes élastiques (25, 26).

15. Dispositif selon l'une des revendications 11 à 13, **caractérisé en ce que** le dispositif de commande (33) comprend un boîtier (34), sur lequel, pour le verrouillage de celui-ci, sont formées, dans un réceptacle y associé, des pattes élastiques (35, 36) pourvues, sur leur surface biseautée, de nervures de serrage (35', 36'), lesquelles nervures de serrage (35', 36') s'engagent, à l'état verrouillé, dans des ouvertures du réceptacle formant des contre-dépouilles, et provoquent le verrouillage par la force élastique, appliquée par les pattes élastiques (35, 36).

16. Dispositif selon l'une des revendications 11 à 15, **caractérisé en ce que** le dispositif de commande (2, 16, 23, 33) est un circuit de commutation électrique pour l'actionnement du dispositif de verrouillage central d'un véhicule automobile et le premier module est une portière d'un véhicule automobile.
